(19) Europäisches Patentamt / European Patent Office / Office européen des brevets

(11) **EP 1 212 580 B1**

(12) **EUROPEAN PATENT SPECIFICATION**

(45) Date of publication and mention
of the grant of the patent:
**03.04.2013 Bulletin 2013/14**

(21) Application number: **00966730.4**

(22) Date of filing: **15.09.2000**

(51) Int Cl.:
***G01B 9/02*** *(2006.01)*      ***G01B 11/06*** *(2006.01)*

(86) International application number:
**PCT/US2000/025377**

(87) International publication number:
**WO 2001/020252 (22.03.2001 Gazette 2001/12)**

(54) **METHOD AND APPARATUS FOR PERFORMING OPTICAL MEASUREMENTS OF LAYERS AND SURFACE PROPERTIES**

METHODE UND APPARAT FUR OPTISCHE MESSUNGEN VON SCHICHTEN UND OBERFLACHENEIGENSCHAFTEN

EXECUTION DE MESURES OPTIQUES POUR COUCHES ET CARACTERISTIQUES SUPERFICIELLES

(84) Designated Contracting States:
**DE FR GB IT NL**

(30) Priority: **16.09.1999 US 154266 P**
**14.09.2000 US 661818**

(43) Date of publication of application:
**12.06.2002 Bulletin 2002/24**

(73) Proprietor: **MKS Instruments, Inc.**
**Andover, MA 01810 (US)**

(72) Inventors:
• **ROSENTHAL, Peter, A.**
**West Simsbury, CT 06092 (US)**

• **XU, Jiazhan**
**New Haven,**
**Connecticut 06511 (US)**

(74) Representative: **Jackson, Derek Charles**
**Derek Jackson Associates**
**The Old Yard**
**Lower Town**
**Claines**
**Worcestershire WR3 7RY (GB)**

(56) References cited:
**EP-A- 0 503 874      EP-A- 0 652 415**
**US-A- 5 243 405      US-A- 5 502 564**

**Description**

BACKGROUND OF THE INVENTION

The ability to fabricate thin film stacks, to specification, is of primary importance to the successful manufacture of microelectronic devices, and control of the physical and compositional parameters of the film stacks has become increasingly crucial to such ability as tighter fabrication tolerances are imposed. Optical spectroscopic metrology has been demonstrated to be a powerful tool for the characterization of materials, and has been used as a non-invasive and non-destructive sensor in the semiconductor industry for process control. As disclosed in United States patents Nos. 5,403,433 and 5,604,581, for example, Fourier Transform Infrared (FTIR) spectroscopy-based sensors employ the principles of interferometry to extract information regarding film thicknesses and dielectric functions from the analysis of reflectance data observed in the spectra. Fundamental to the precise determination of thin film thickness and optical parameters is the ability to make accurate measurements that are free from the effects of experimental artifacts, such as ghost reflections of light from wafer backside surfaces; it is of course desirable to measure only light that is reflected from the front surface, or some other surface, of the film stack.

Many thin film stacks are processed on substrates that are transparent, or partially transparent, to the wavelengths of radiation at which measurements are most effectively made. For example, more than half of the integrated circuit (IC) chips provided use low-doped and undoped silicon as substrates. In measurements made utilizing conventional optical systems, backside reflection is present along with the front surface reflection. Since the level of backside reflection depends upon many factors, such as the nature of back-surface layers, surface quality, and substrate adsorption, and is difficult to predict, elimination of the backside ghost reflection spectral artifacts is regarded to be a key to the accurate spectral analysis of film stacks. Similar issues are also present when films are processed on glass or other optically transparent substrates.

One way to eliminate ghost reflections is to roughen the backsides of the wafers, but that is of course a complicated and time-consuming procedure. Another technique uses micro-spot tools; typically, however, such tools suffer from relatively low optical throughput, which fundamentally constrains the signal-to-noise ratio (S:N) as compared to values that might otherwise be achieved, and measurement times are typically long, thus limiting their use in applications such as for mapping of film thicknesses across a wafer. Moreover, the small spot tools usually have short working distances, which limits their use as in-line metrology tools, such tools desirably being employed in semiconductor fabrication processes to afford faster process tuneup, fault detection, and tighter feedback control. A high throughput optical system, providing long working distances and the capability of suppressing backside reflection, is therefore important, and indeed necessary, in many device-fabrication processes.

US-A-5 243 405 describes an optical system that images a section of a textured surface. A recording device is mounted at the rear of a cylinder spread lens assembly and a spherical achromatic lens images an illuminated surface of the textured surface upon the cylinder spread lens which then presents an image to the detector/recording surface.

EP-A-0 652 415 describes a thin film thickness measuring device which includes an illuminator, a receiver and a beam deflector. The illuminator provides a collimated input light beam, while the receiver includes a lens and a diaphragm having a pinhole located at a focal point of the lens.

EP-A-0 503 874 describes an optical measurement device having a laser for generating a probe beam which is tightly focused onto the surface of a sample, and a detector for monitoring a parameter of the reflected probe beam. A spatial filter reduces the amount of light energy reaching the detector that has been reflected from areas on the surface of the sample beyond the focused spot.

US-A-5 502 564 describes an oblique incidence multispectral interferometer for measuring gross surface height errors and for measuring the total thickness of a substrate such as a semiconductor wafer or a photo mask.

US-A-4 315 688 describes a method and apparatus for inspecting threaded objects and for determining the depth of blind holes. For inspecting threads, a light source is provided for illuminating threads of a threaded object. A lens forms an image of the illuminated threads. A detector having a light sensitive area sufficiently small to resolve the thread image is provided to detect the image and an output signal is produced in response to the incident image light. The output signal is analyzed to determine the quality of the threads. For determining the depth of a blind hole, a light source forms a spot on the bottom of a blind hole in an object and the lens forms an image of the spot. Means are provided to detect the spot image to produce an output signal responsive to the incident image light. Means are provided to analyze the output signal to determine hole depth.

SUMMARY OF THE INVENTION

The objects of the present invention are to avoid or minimize the limitations and deficiencies of existing optical measurement apparatus and methods, as discussed above. Broadly, the invention relates to controlling layer, interface, and surface properties of thin films fabricated during or after the manufacturing of microelectronic devices, solar conversion devices, magnetic storage devices, and other similar devices. It provides a new apparatus and method for performing optical measurements of thin film stacks on transparent and non-transparent substrates, and other workpieces, and is based upon a confocal optical configuration to reject backside ghost reflections as well as ghost reflections from other features within the structure.

More specific objects of the invention are to provide a method and apparatus for making accurate optical measurements of physical and compositional parameters of top and subsurface layers of film stacks and other structures, particularly for microelectronic device fabrication, which method and apparatus afford high energy throughput levels and, in turn, good S:N values.

According to one aspect of the present invention there is provided a method for making optical measurements on a workpiece disposed at a measurement position, said workpiece having at least one substantially non-scattering, reflective surface and a thickness dimension, comprising the steps of (a) projecting at least one beam of radiation upon said one surface of said workpiece, said beam being focused so as to produce at least one illuminated area on said one surface that is elongated in one direction and relatively narrow in directions substantially perpendicular thereto, said beam being projected along a path disposed at an angle in the range of about plus 45° to minus 45°, taken azimuthally relative to a plane lying medially of said one area and perpendicular to both the length of said area and also said one surface, said path additionally being disposed at an attitude of about 15° to 75° relative to normal to said one workpiece surface, and (b) detecting radiation reflected by said one illuminated area, said workpiece having at least one subsurface feature, below said one surface, that reflects said projected radiation and thereby causes a ghost image of said one illuminated area to be formed on said one surface thereof, wherein said method includes the further step (c) of interposing spatial filter means between said workpiece and means used for detecting said projected radiation so as to provide conditions of illumination whereby overlap of said one illuminated area and said ghost image is avoided, said spatial filter means defining at least one generally slit-like aperture, that permits radiation reflected in step (b) by said one illuminated area to be detected substantially exclusively of emanating ghost image radiation.

Said one surface may be the top surface of said workpiece or it may lie below the top surface of said workpiece.

Said workpiece may comprise a substrate and at least one additional layer of material on said substrate, said one surface lying at the interface of said at least one additional layer and underlying structure.

Said one subsurface feature may comprise the backside of said workpiece or may lie within the thickness of said workpiece.

Said workpiece may comprise a wafer of semiconducting material (e.g., silicon), for example in the form of a substrate (e.g., a silicon substrate) and at least one additional layer of material (e.g., an epitaxial layer) on said substrate, said one subsurface feature lying for example at the interface of said at least one additional layer and underlying structure.

Said at least one beam may comprise radiation in at least one of the infrared, visible, and ultraviolet spectral ranges.

Said step of projecting said at least one focused beam of radiation may produce a plurality of said illuminated areas on said one surface, and a corresponding plurality of ghost images thereon (the areas and images, for example, being substantially identical in form and orientation), said conditions of illumination causing said areas and images to be spaced alternatingly along said plane of incidence and sufficiently to avoid overlap of any two of said areas and images.

A plurality of said beams of radiation may be so projected and focused to produce said at least one illuminated area, said at least one beam comprising said principal ray and all of said beams being projected along paths so disposed.

The aperture may be dimensioned, configured, and disposed to permit passage of only said reflected illuminated area radiation.

The method may include the additional step (d) of measuring the intensity of said radiation detected in said step (b). The method may include the further steps of: (e) substituting for said workpiece, at said measurement position, a reference sample having a known reflectance value, and carrying out said steps (a), (b), and (d) on said reference sample under said conditions of illumination; and (f) multiplying the ratio of the workpiece:sample radiation intensities, measured in said steps (d), by said known reflectance value to thereby determine the reflectance of said at least one workpiece surface.

According to another aspect of the present invention there is provided an apparatus for making optical measurements on a workpiece, comprising:

means for supporting a workpiece at a measurement position;
means for projecting at least one beam of radiation obliquely upon a selected surface of a workpiece, so supported by said means for supporting, the one beam being focused so as to produce at least one illuminated area on the selected workpiece surface, which area is elongated in a direction substantially perpendicular to the direction of a principal ray of the beam and is relatively narrow in directions substantially parallel thereto; and
means for detecting radiation reflected from the at least one illuminated area on a selected surface of a workpiece so supported,
wherein spatial filter means is operatively interposed between said workpiece and means, said spatial filter means defining at least one generally slit-like aperture so as to substantially exclude reflected radiation components of the projected beam emanating from areas on the selected surface other than said one illuminated area.

Said means for projecting may be constructed to project a beam along a path disposed at an angle in the range of about plus 45° to minus 45°, taken azimuthally relative to a plane lying medially of said one area and perpendicular to both the length of said area and also the selected workpiece surface, said path additionally being disposed at an attitude of about 15° to 75 ° relative to normal to said selected workpiece surface.

Said means for projecting may comprise a source of radiation in at least one of the infrared, visible and ultraviolet spectral ranges.

Said means for projecting may comprise further spatial filter means operatively interposed between said source of radiation and said means for supporting. Said further spatial filter means may define at least one generally slit-like aperture through which passes radiation from said radiation source.

Said at least one generally slit-like aperture may permit substantial passage therethrough of only radiation reflected from the at least one illuminated area on the selected workpiece surface.

Said means for projecting and said means for detecting may include optics for focusing the projected beam at a focal plane on the selected workpiece surface, and for focusing radiation reflected from the at least one illuminated area at an image plane, respectively.

Said means for projecting may produce a plurality of such illuminated areas mutually spaced apart from one another.

Said means for projecting may produce a plurality of such beams, so focused to produce the at least one illuminated area.

The apparatus may additionally include means for measuring the intensity of radiation detected by said means for detecting. The apparatus may additionally include means for determining the reflectance of the selected surface of a workpiece utilizing the measured intensities of radiation reflected from the workpiece selected surface and from a reference sample having a known reflectance value. Said means for measuring and said means for determining may comprise electronic data processing means.

The apparatus may comprise an FTIR spectrometer.

BRIEF DESCRIPTION OF THE DRAWINGS

Figure 1 of the drawings is a schematic diagram of a basic system embodying the broad concepts of the present invention;

Figure 2A is a schematic diagram illustrating the shift of a backside ghost reflection image relative to the position of the illuminated area or image projected upon the top surface of a transparent substrate using a spatial filter having a slit-like aperture, and Figure 2B is a schematic diagram showing the shifts of ghost reflection images produced using a structure having three slit-like apertures;

Figure 3 is a schematic diagram showing an optical reflectometry measurement system embodying the invention and having the ability to suppress ghost reflections;

Figure 4 is a schematic diagram showing an optical system embodying the invention, and being adapted for making ellipsometry measurements;

Figure 5 is a schematic drawing showing another optical system embodying the invention, and being capable of measuring reflectance and temperature; and

Figure 6 is a schematic plan view of a spatial filter plate utilized in the present apparatus, and providing a slit-like aperture.

DETAILED DESCRIPTION OF THE

PREFERRED AND ILLUSTRATED EMBODIMENTS

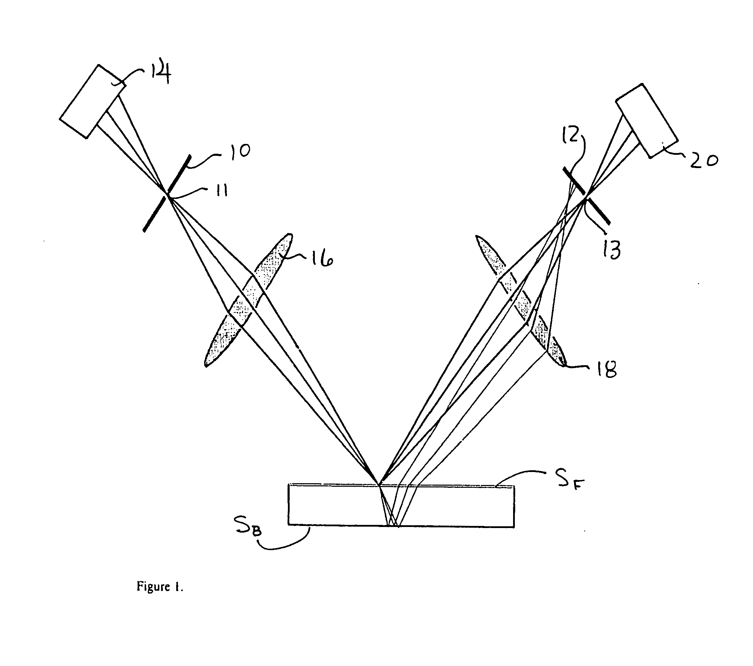

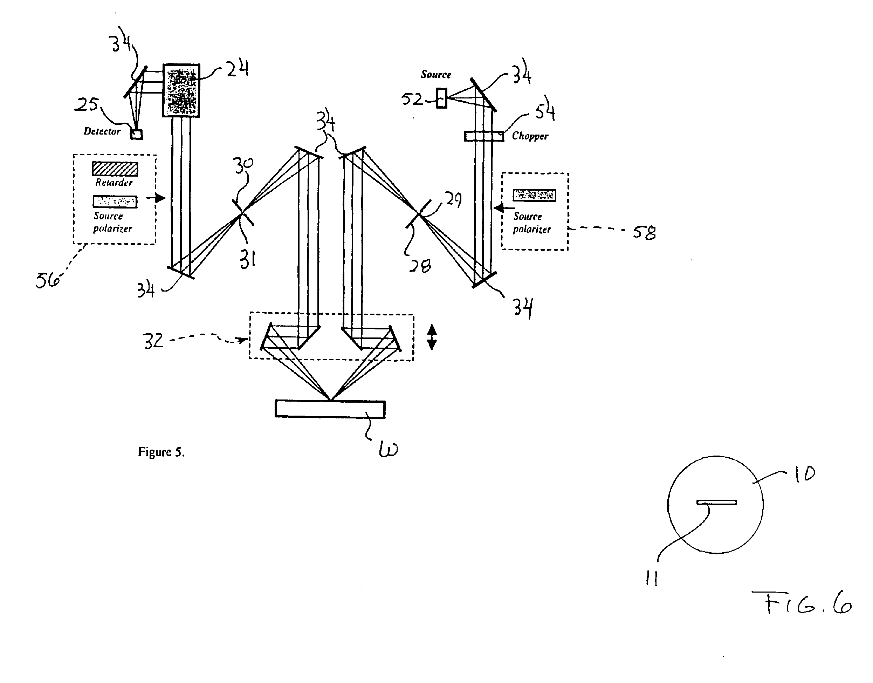

Turning now in detail to the appended drawings, Figure 1 broadly illustrates the present concept for suppression of backside reflection, in which a first plate 10 (shown in plan in Figure 6) provides a field stop aperture 11 for defining the illumination spot or area, and a second, similar plate 12 provides an aperture 13 for accepting light from a front surface and suppressing the backside ghost reflection. Typically, light generated from a source 14, such as an infrared or UV/visible source, is focused upon the source aperture 11 and is then imaged by focusing elements 16 onto the sample front surface $S_F$. Light reflected from the surface $S_F$ will be refocused by element 18 so as to pass through the aperture 13 to the detector 20, whereas light reflected from the backside $S_B$ is blocked from the detector 20 by the area of the plate 12 surrounding the aperture.

The proper choice of aperture size will depend upon the separation of the light reflecting from the front and back surfaces, respectively, at the detector aperture plane, which separation will in turn depend upon the index of refraction and thickness of the wafer, and the incident angle of a particular ray of light. Optimal performance, with maximal separation, will often be achieved when the incident angle is about 45,° albeit significant separation exists of course at other incident angles as well (normally in the range 15° to 75° from normal to the workpiece surface being measured). By using apertures of suitable size, and limiting the range of incident angles appropriately, the backside reflected light can be suppressed completely.

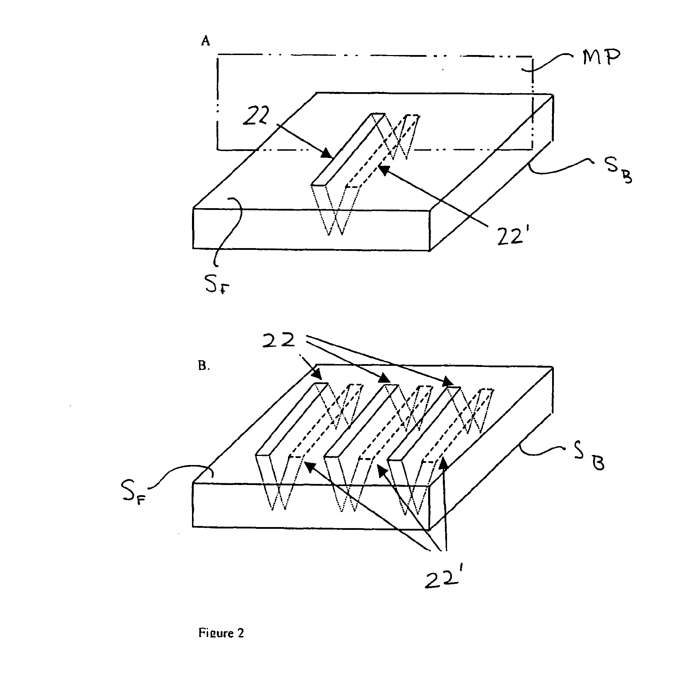

To achieve that level of suppression the size of the apertures employed will typically be as small as a few hundred microns, which will usually result in low signal to noise ratios. It is found that the separation of light reflecting from the front surface and the backside is one-dimensional, and that therefore the use of a long slit aperture will effectively reject the backside reflection while allowing increase of the signal level of the beam. This is illustrated in Figure 2A, wherein the solid line rectangle 22 represents a slit illuminated onto the front surface $S_F$ and the dotted line rectangle 22' represents the ghost reflection image from the backside $S_B$. The Figure also depicts a medial plane MP, which is perpendicular to both the long axis of the area 22 and also to the surface $S_F$.

The use of long slit apertures can significantly enhance the signal to noise ratio and shorten measurement times. For this to occur, the incident beam will preferentially be confined to within the solid angle defined to be between conical surfaces at 15° and 75° relative to the workpiece normal, and between planes oriented +45° and -45° relative to the medial plane, and parallel thereto. Most desirably, the plane of incidence of the principal ray of the probe beam will be coincident with the medial plane, or at least substantially so (e.g., within plus or minus 10° thereof).

It is found that the use of multiple slit apertures, in accordance with the present invention, can effectively reject the backside reflection (or other aberrant reflection) and further increase the signal to noise ratio of the system, provided the size and mutual separation of the slits are appropriate, as shown in Figure 2B; i.e., for best results there must be no overlap between any of the ghost images and the front surface illuminated areas. It is also possible to use a detector array in place of the detector slit apertures, which enables the choice of measurement spot to be single or multiple slit areas in the data acquisition software.

As indicated, the present method can be applied widely to perform optical measurements of thin film stacks on both transparent and non-transparent substrates. The optical system will generally consist of a light source and a detector, a spectrometer, an optical layout with apertures capable of eliminating backside (or other subsurface feature) reflection, software to acquire spectra from the spectrometer, and spectral analysis software to perform model-based thin film analyses. More specific systems embodying the invention are described below:

EXAMPLE ONE

FTIR Reflectometry Measurement

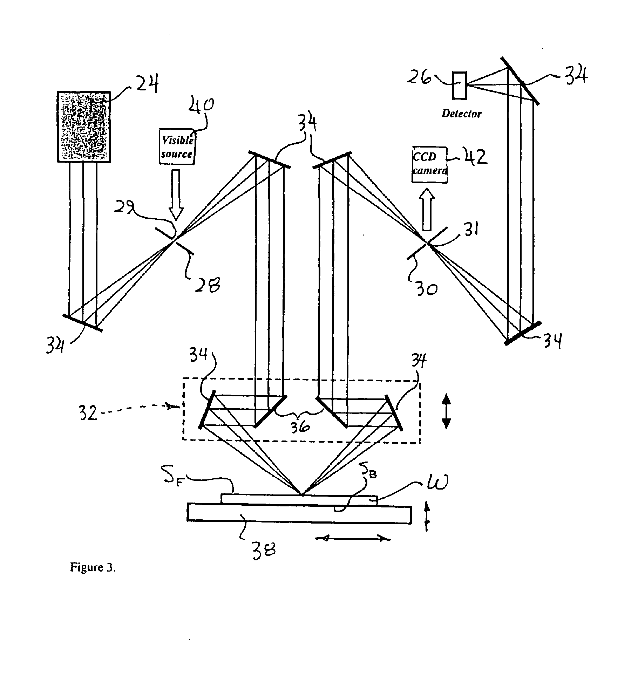

Figure 3 illustrates the optical layout of an FTIR reflectometer capable of measurement of film stacks on both transparent and non-transparent substrates. The system comprises an FTIR spectrometer 24, an infrared detector 26, a source aperture plate 28, a detector aperture plate 30, an objective, generally designated 32 and consisting of an arrangement of off-axis parabola mirrors 34 and flat mirrors 36, and five off-axis parabola mirrors 34. A collimated infrared beam, generated from the spectrometer 24, is focused onto the source aperture 29, which is then imaged by the objective 32 onto the surface of a wafer W. Light reflected from the front surface $S_F$ of the wafer W passes through the detector aperture 31 and is detected by the detector 26, while light reflected from the backside $S_B$ is blocked by the margins of the plate 30 surrounding the aperture 31.

In operation, one would typically first place an undoped silicon wafer W on the wafer stage 38, maximize the signal by optimal positioning of the wafer stage 38 and/or the objective 32, and measure a reference spectrum. A sample wafer is then substituted on the wafer stage, the optics are focused, and a sample spectrum is measured. Since the optical properties of undoped silicon are known, the sample reflectance can readily be determined. The reflectance spectrum can then be analyzed using model-based software to extract thin film parameters such as thickness, dielectric function, and doping concentration. Slit apertures, as described above, can be employed in the system of this Figure to enhance the signal to noise ratio in the measurements made.

One advantage of the present system is that it enables more accurate measurement with shorter measurement time, as compared to current technology. Due to the ability that it affords for suppressing or eliminating aberrant reflection contributions, the system requires the use of only a readily available surface of known reflectance (e.g., undoped silicon) as a reference, and requires less complicated procedures for its calibration. Many current practices require calibration to be performed on the same measurement system as the target machine. Recently, On-Line Technologies, Inc. (of East Hartford, Connecticut) introduced a calibration routine that uses relatively simple calibration samples, such as a set of films covering a range of composition, all deposited on inexpensive, unpatterned silicon; even using that system, however, calibration must still be performed on each machine. As applied in the IR range, the present invention ensures that highly polished, lightly doped Si surfaces ($1 \times 10^{16}$ cm$^{-3}$ and less) will be virtually identical insofar as their reflectance is concerned, and different Si elements can therefore be used interchangeably as the reference surface.

It is particularly advantageous to construct infrared systems using reflect focusing optics, to eliminate chromatic aberration. Doing so notonly benefits infrared spectroscopic measurements, but it also allows the coupling of video components into the system for pattern recognition of wafers. In the system of Figure 3, for example, a visible source 40 (comprising a 20 W halogen lamp) and a CCD camera 42, together with appropriate focusing elements (not shown), can be incorporated, as illustrated. While infrared light passes through the source and detector apertures 29, 31, visible light generated by the halogen lamp 40 is focused onto and reflected from the source aperture plate 28 and is then imaged by the objective 32 onto the sample surface $S_F$. Light reflected from the surface will be refocused onto the detector aperture 31, and will be reflected by the plate 30 defining the aperture and detected by the CCD camera 42. With this configuration the measurement spot of the infrared reflectometer will appear dark in the video image. Typical integrated circuit structures include rectangular areas that are available for making measurements, enabling convenient positioning of the elongated measurement spot on patterned wafers using the video systems described.

An auto-focusing mechanism can also be incorporated into the system to provide fast focusing by adjusting either the objective or the sample vertically. This feature, together with the high S:N and short measurement time afforded, allows high-speed mapping of the thickness distribution of the constituent thin films across a wafer, thereby providing information for fabrication processes tune up, as is particularly desirable in thin film metrology.

The provision of in-line metrology in semiconductor fabrication processes advantageously allows not only faster process tune up and fault detection, but also provides tighter feedback control, lower operating costs, and reductions in monitor wafer usage. A key to effective in-line metrology technology is the development of measurement tools that can rapidly and nondestructively characterize wafers during process steps. Movement of the objective for auto-focusing, as is enabled by the optical system described herein, is advantageous in many applications but is especially beneficial for in-line metrology of moving wafers under circumstances in which movement of the wafer stage is not desirable. Because of the higher throughput of energy that is achieved by using slit apertures, moreover, longer focal length mirrors can be employed while maintaining reasonable signal to noise ratios, with the resulting long working distance feature enhancing in-line metrology capability.

Although the present Example illustrates a effective arrangement for making FTIR reflectometric measurements, it will be appreciated that other optical layouts, using on-axis mirrors and/or lenses, are also possible. The concepts disclosed can of course be extended, moreover, to reflectometric applications in spectral regions other than the infrared, such as UV and visible.

EXAMPLE TWO

FTIR Elliposometry Measurement

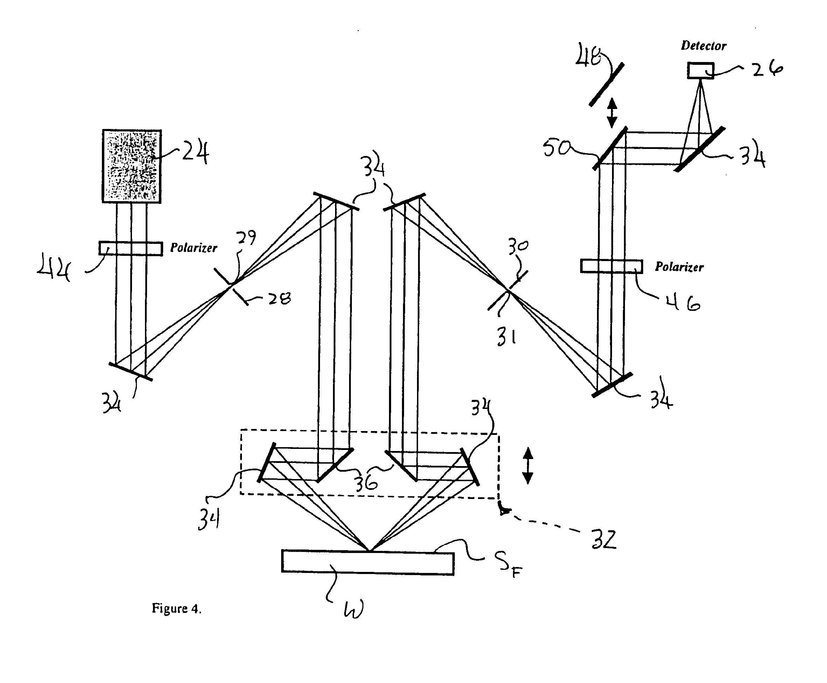

Figure 4 illustrates an optical layout for the FTIR elliposometric measurement of thin film stacks on transparent and non-transparent substrates; components that are common to the system of Figure 3 (and indeed, to the system of Figure 5, which is to be described) are designated by the same numbers. In addition to the optical components for reflectometric measurement discussed above, two polarizers 44 and 46, and an optional retarder/mirror arrangement, are used in the system to generate and detect polarized light. As will be appreciated, different objectives 32 may be used interchangeably, thus enabling the incident angle to be optimized for specific applications; it will be appreciated in this regard that higher sensitivity will typically be achieved when the incident angle is close to the Brewster's angle value.

In one mode of operation of the system of Figure 4, the angle of the source polarizer 44 is set to 45° with respect to the incident plane. With a sample W in focal position, and a mirror 48 in the retarder position, four spectra are measured with the angle of the detector polarizer 46 set at 0°, 45°, 90 ° and 135 °, respectively; four spectra are also measured with the flat mirror 48 being replaced by a retarder 50 and with the detector polarizer angle set at the same four angles. Optical parameters $\Delta$ and $\delta$ can be determined from the spectra thus obtained, and analyzed using model-based software to extract thin film thickness and optical properties. Typically, a gold-coated wafer is used to calibrate the system.

The use of an elliposometric measurement technique is advantageous in its ability to detect thinner film stacks and in the lower detection limits it offers; both optical constants and also thickness of the layers can be extracted. With the rejection of backside reflection, moreover, the accuracy of measurement is improved and better optical modeling can be achieved, as compared to that of a conventional large spot system. It is anticipated that the use of the present technology in connection with microelectronic device fabrication will increase as the requirements for thinner films increase and as other optical metrology tools are found to be deficient in providing requisite levels of sensitivity.

As will be appreciated, the concepts disclosed herein for rejection of backside and other reflections can be extended to visible elliposometric measurement so as to improve the signal to noise ratio therein. Many optical configurations can be used moreover since, for example, lenses can be employed as focal elements.

EXAMPLE THREE

Reflectance and Elliposometric

Measurements at Elevated Temperatures

Figure 5 illustrates an optical layout that is especially well suited for accurately measuring the reflectance and temperature of a hot sample. In this setup, a collimated infrared beam from a stable infrared or a black body source 52 is directed into an electronic chopper 54. Light passing through the chopper is focused onto the source aperture 29, which is imaged onto the sample surface W by the objective 32 and is reflected from the front surface $S_F$ through the detector aperture 31 to the FTIR spectrometer 24 and ultimately the detector 25. Since the sample is at an elevated temperature its thermal radiation will be detected together with light from the source; on the other hand, only thermal radiation from the sample will reach the detector 25 when the infrared light is blocked by the chopper 54.

The action of the electronic chopper can be synchronized to the moving mirror in the FTIR spectrometer 24 such that the forward scan of the mirror will correspond to the "open" position of the chopper, with the detector 25 collecting a composite signal generated by radiation from the source 52, the hot sample W, and the background, and such that the backward mirror scan will correspond to the "closed" position of the chopper, with the detector therefore collecting a signal generated by radiation from the heated sample and background only. Collection of a double interferogram enables detection of the signals received with the chopper in its "open" and "closed" positions, respectively, allowing sample reflectance to be determined at various temperatures in accordance with the relationships:

$$S_{open} = C*R_{source}*r_{sample} + C*P(T_{sample})*\varepsilon_{sample} + B \quad (1)$$

$$S_{close} = C*P(T_{sample})*\varepsilon_{sample} + B \quad (2)$$

in which $S_{open}$ and $S_{close}$ are the signals received by the detector when the chopper is in its "open" and in "closed" positions, respectively, C is the path correction of the signal, $R_{source}$ is the radiance of source at the sample surface, $r_{sample}$ is the sample reflectance, $P(T_{sample})$ is the Planck function at the sample temperature, $\varepsilon_{sample}$ is the sample emissivity, and B is the background contribution. Since C, B and $R_{source}$ can be calibrated using a bare silicon wafer of known reflectance, the sample reflectance can be obtained by subtraction of equation (2) from equation (1):

$$r_{sample} = (S_{open} - S_{close}) / (C*R_{source}), \quad (3)$$

in which $r_{sample}$ is the reflectance of samples for thin film stacks on both transparent and also non-transparent substrates.

If the substrate of the sample is non-transparent, $\varepsilon_{sample}$ is equal to 1- $r_{sample}$, and the sample temperatures can be determined from equation (2). If there is a calibrated thermal couple in the heating device, it can be used to determine sample temperatures. For example, a P+ silicon wafer can be used to calibrate the thermal couple, and the temperature of film stacks on undoped silicon substrates can be determined. Since the method measures sample emissivity, the determination of temperature is more accurate, as compared to that which can be achieved using other techniques.

The ability to measure reflectance and temperature simultaneously is very important, because many semiconductor fabrication processes are of course carried out at elevated temperatures. For example, understanding and controlling the chemistry that occurs in the soft bake and hard bake treatments of photoresists is key to successful integrated circuit fabrication and the development of new photoresists. Spin-on, low-K dielectric materials require a high temperature bake; the temperature and reflectance measurements enabled hereby, together with model-based thin film analysis software of the kind described, provide the tools necessary for the development of new photoresists and low-K dielectrics.

As is indicated by the dotted line representations 56 and 58, polarizers and retarders can be integrated into the system depicted in Figure 5 for making elliposometric measurements of samples at elevated temperatures, using a procedure similar to that which is described in Example Two. Reflectance at a particular polarization angle will however be obtained using equation (3) above.

As used herein, the "principal ray" is defined to constitute the sum of the vectors of all of the rays of which an incident beam is comprised. The vector of each ray is in turn defined to have a direction parallel to the direction of the ray, and an amplitude given by the intensity of the ray.

It is also to be understood that, although illuminated areas illustrated in the drawings are substantially rectangular, the actual areas produced will often have a curvilinear and/or somewhat irregular configuration. Essentially, the invention contemplates any illuminated area that is relatively long and narrow, provided the radiation reflected from one such area does not so overlap a ghost image or another illuminated area as to prevent the discrimination that is required for effective detection of the reflected radiation exclusively of emanating ghost image radiation.

It will also be appreciated that many variations can be made, within the scope of the invention, from the specific method and apparatus features herein before disclosed. The means to provide a beam of light with which to probe a sample (i.e., a light source with source optic) will preferably constitute an IR/NIR light source with a system of lenses and/or mirrors to form a well-defined IR beam. Alternatively, a UV/visible light source may be employed. More specifically, the source and source optics may constitute an FTIR, generating a collimated beam of modulated light, a quartz halogen UV/VIS/NIR source, a deuterium light source, or a laser source.

Specific focusing optics include a parabolic mirror assembly focussing the light onto an aperture, or an aspheric mirror assembly that can image a square area onto a rectangular field. Specific apertures for desired illumination patterns include a small circular or square aperture that can be used to illuminate a small area on a sample; an elongated (e.g., rectangular) aperture or slit that can be used to illuminate a relatively long and narrow area on a sample; a parallel array of elongated apertures that can illuminate a parallel array of stripes, spaced such that all of the ghost images fall between the illuminated stripes on the workpiece surface; or a large square or rectangular aperture that can be focussed, with appropriate aspheric optics, to a long and narrow illumination pattern on the sample. A system that is optimized for glass and other substrates transparent at visible wavelengths can utilize a UV/VIS/NIR light source coupled into linear fiber ribbon to generate an elongated illumination pattern, which is imaged at oblique incidence onto the sample; the light is collected and refocussed back into a linear fiber array which is guided to a grating spectrometer. Polarizing optics and retarders can optionally be installed to perform polarization-dependent measurements and ellipsometry, and it will be appreciated that the arrangement and configuration is by no means limited to that which is described in EXAMPLE TWO and illustrated by Figure 4.

Use of an imaging detector and software algorithm to eliminate ghost reflections is feasible because of the spatial separation that is produced between the light reflected from the illuminated image and the emanating ghost radiation. In such embodiments the reflected light will illuminate a different set of pixels than the light emanating from the ghost image, with image-processing software being used to select the pixels illuminated by the radiation that is to be detected.

The apparatus of the invention may also include means to isolate the sample from the optical assembly, so as to allow measurements with the sample in a reactive, corrosive environment or vacuum, thereby protecting the sample from contamination by the optical system and protecting the optics from contamination or attack by the atmosphere surrounding the sample. Such means may take the form of windows disposed between the focussing optics and the sample, to maintain a vacuum, prevent entry of particles and other contamination, etc. Typical IR-transparent windows include ZnSe and $CaF_2$, disposed parallel to the sample plane for infrared wavelengths; the disposition of the focussing mirror would be adjusted to minimize aberrations associated with focussing the light obliquely through a window onto a sample, thereby maximizing the working distance. Alternatively, windows can be oriented perpendicular to a beam, so as to minimize aberration without requiring mirrors customized for the window material.

Among the means that can be used for insuring adequate focus of the system on the workpiece, and to accommodate variations in sample height, are included servo-controlled autofocus mechanisms. In such a mechanism, the light couples into the objective by way of a nearly collimated beam perpendicular to the sample plane, and the objective is moved along this perpendicular direction to vary the vertical position of the focussed spot to the desired elevation, usually the sample surface; the focus can however be positioned to coincide with structure such as an interface layer or a defect buried in the sample. An autofocus mechanism can be actuated by a precision servo-controlled vertical stage driven by some combination of a drive screw, a voice coil, a piezoelectric, or other linear actuator. The servo-control may employ a sensor whose signal varies as the focus spot passes through the surfaces of the sample. A laser beam, confocal with the measurement beam picked up by a detector, provides a suitable source for servo-loop autofocus signals; if the laser wavelength is selected so that the substrate is opaque, then the autofocus signal will maximize when the optics are focussed on the sample surface. Alternatively, an autofocus signal may employ the signal strength of the probing beam reflected from the sample, an interferometer to gage the distance between the sample and the optical assembly, a capacitive sensor to gage the sample/optics distance, or aperture positions in a CCD image to determine sample/optics distance. A visible source and a camera may be integrated into the optical system to provide means for wafer pattern recognition, as previously described.

Finally, two or more optical techniques, such as combinations of UV/VIS/NIR/MIR, may be integrated to probe the same surface. For example, the surface may be illuminated directly with UV/visible light at normal or oblique incident angles, detecting the reflected light using a UV/VIS detector. Also, a small area mirror may be placed in the primary beam (thereby only negligibly influencing the signal) so that light from a UV/visible source can be focussed on to the sample surface; another small mirror in the exit beam will allow the reflected light to reach a UV/VIS detector.

Thus, it can be seen that the foregoing and related objects of the invention are attained by the provision of the method and apparatus described herein. More particularly, the present method and apparatus serve to avoid or minimize the limitations and deficiencies of existing optical measurement apparatus and methods, as discussed above, enabling control of layer, interface, and surface properties of thin films fabricated during or after the manufacturing of microelectronic devices, solar conversion devices, magnetic storage devices, and other similar devices. Means is provided for performing optical measurements of thin film stacks on transparent and non-transparent substrates, and other workpieces, based upon a confocal optical configuration to reject backside ghost reflections as well as ghost reflections from other features within the structure. The method and apparatus of the invention enable accurate optical measurements of physical and compositional parameters of top and subsurface layers of film stacks and other structures, affording high energy throughput levels and, in turn, good S:N values.

## Claims

1. A method for making optical measurements on a workpiece (W) disposed at a measurement position, said workpiece having at least one substantially non-scattering, reflective surface ($S_F$) and a thickness dimension, comprising the steps of (a) projecting at least one beam of radiation upon said one surface ($S_F$) of said workpiece (W), said beam being focused so as to produce at least one illuminated area (22) on said one surface that is elongated in one direction and relatively narrow in directions substantially perpendicular thereto, said beam being projected along a path disposed at an angle in the range of about plus 45° to minus 45°, taken azimuthally relative to a plane lying medially of said one area (22) and perpendicular to both the length of said area and also said one surface, said path additionally being disposed at an attitude of about 15 ° to 75 ° relative to normal to said one workpiece surface, and (b) detecting radiation reflected by said one illuminated area, said workpiece having at least one subsurface feature ($S_B$), below said one surface, that reflects said projected radiation and thereby causes a ghost image (22') of said one illuminated area to be formed on said one surface thereof, **characterised by** the step (c) of interposing spatial filter means (12, 30) between said workpiece (W) and means (20,26) used for detecting said projected radiation so as to provide conditions of illumination whereby overlap of said one illuminated area and said ghost image is avoided, said spatial filter means (12, 30) defining at least one generally slit-like aperture (13,31), that permits radiation reflected in step (b) by said one illuminated area (22) to be detected substantially exclusively of emanating ghost image radiation.

2. A method according to claim 1, wherein said one surface ($S_F$) is the top surface of said workpiece (W).

3. A method according to claim 1, wherein said one surface lies below the top surface of said workpiece (W).

4. A method according to claim 3, wherein said workpiece (W) comprises a substrate and at least one additional layer of material on said substrate, and wherein said one surface lies at the interface of said at least one additional layer and underlying structure.

5. A method according to any preceding claim, wherein said one subsurface feature comprises the backside ($S_B$) of said workpiece (W).

6. A method according to any one of claims 1 to 4, wherein said one subsurface feature ($S_B$) lies within the thickness of said workpiece (W).

7. A method according to claim 6, wherein said workpiece (W) comprises a substrate and at least one additional layer of material on said substrate, and wherein said one subsurface feature ($S_B$) lies at the interface of said at least one additional layer and underlying structure.

8. A method according to any preceding claim, wherein said at least one beam comprises radiation in at least one of the infrared, visible, and ultraviolet spectral ranges.

9. A method according to any preceding claim, wherein said workpiece (W) comprises a wafer of semiconducting material.

10. A method according to claim 9, wherein said workpiece (W) comprises a substrate of semiconducting material, and at least one additional layer of material providing said one surface ($S_F$).

11. A method according to any preceding claim, wherein said step of projecting said at least one focused beam of radiation produces a plurality of said illuminated areas (22) on said one surface ($S_F$), and a corresponding plurality of ghost images (22') thereon, said conditions of illumination causing said areas and images to be spaced alternatingly along said plane of incidence and sufficiently to avoid overlap of any two of said areas and images.

12. A method according to any preceding claim, wherein a plurality of said beams of radiation are so projected and focused to produce said at least one illuminated area (22), said at least one beam comprising said principal ray and all of said beams being projected along paths so disposed.

13. A method according to any preceding claim, wherein said aperture is dimensioned, configured, and disposed to permit passage of only said reflected illuminated area radiation (22).

14. A method according to any preceding claim, including the additional step (d) of measuring the intensity of said radiation detected in said step (b).

15. A method according to claim 14, including the further steps of: (e) substituting for said workpiece (W), at said measurement position, a reference sample having a known reflectance value, and carrying out said steps (a), (b), and (d) on said reference sample under said conditions of illumination; and (f) multiplying the ratio of the workpiece: sample radiation intensities, measured in said steps (d), by said known reflectance value to thereby determine the reflectance of said at least one workpiece surface ($S_F$).

16. An apparatus for making optical measurements on a workpiece (W), comprising:

means (38) for supporting a workpiece (W) at a measurement position;
means (14, 24, 52) for projecting at least one beam of radiation obliquely upon a selected surface ($S_F$) of a workpiece, so supported by said means for supporting, the one beam being focused so as to produce at least one illuminated area (22) on the selected workpiece surface, which area is elongated in a direction substantially perpendicular to the direction of a principal ray of the beam and is relatively narrow in directions substantially parallel thereto; and
means (20, 25, 26) for detecting radiation reflected from the at least one illuminated area on a selected surface of a workpiece so supported,
**characterised in that** spatial filter means (12, 13, 30, 31) is operatively interposed between said workpiece (W) and means (26), said spatial filter means defining at least one generally slit-like aperture so as to substantially exclude reflected radiation components of the projected beam emanating from areas (22') on the selected surface other than said one illuminated area (22).

17. An apparatus as claimed in claim 16, wherein said means (14, 24, 52) for projecting is constructed to project a beam along a path disposed at an angle in the range of about plus 45° to minus 45°, taken azimuthally relative to a plane lying medially of said one area (22) and perpendicular to both the length of said area and also the selected workpiece surface ($S_F$), said path additionally being disposed at an attitude of about 15 ° to 75° relative to normal to said selected workpiece surface.

18. An apparatus as claimed in claim 16 or 17, wherein said means (14, 24, 52) for projecting comprises a source of radiation in at least one of the infrared, visible and ultraviolet spectral ranges.

19. An apparatus as claimed in any one of claims 16 to 18, wherein said means (14, 24, 52) for projecting comprises further spatial filter means (10, 11, 28, 29) operatively interposed between said source of radiation and said means (38) for supporting.

20. An apparatus as claimed in claim 19, wherein said further spatial filter means (10, 11, 28, 29) defines at least one generally slit-like aperture through which passes radiation from said radiation source (14, 24, 52).

21. An apparatus as claimed in any one of claims 16 to 20, wherein said at least one generally slit-like aperture permits substantial passage therethrough of only radiation reflected from the at least one illuminated area (22) on the selected workpiece surface (S$_F$).

22. An apparatus as claimed in any one of claims 16 to 21, wherein said means (14, 24, 52) for projecting and said means (20, 25, 26) for detecting includes optics (16, 18, 32, 34, 36) for focusing the projected beam at a focal plane on the selected workpiece surface (S$_F$), and for focusing radiation reflected from the at least one illuminated area (22) at an image plane, respectively.

23. An apparatus as claimed in any one of claims 16 to 22, wherein said means (14, 24, 52) for projecting produces a plurality of such illuminated areas (22) mutually spaced apart from one another.

24. An apparatus as claimed in any one of claims 16 to 23, wherein said means (14, 24, 52) for projecting produces a plurality of such beams, so focused to produce the at least one illuminated area (22).

25. An apparatus as claimed in any one of claims 16 to 24, additionally including means for measuring the intensity of radiation detected by said means (20, 25, 26) for detecting.

26. An apparatus as claimed in claim 25, additionally including means for determining the reflectance of the selected surface (S$_F$) of a workpiece (W) utilizing the measured intensities of radiation reflected from the workpiece selected surface and from a reference sample having a known reflectance value.

27. An apparatus as claimed in claim 26, wherein said means for measuring and said means for determining comprises electronic data processing means.

28. An apparatus as claimed in any one of claims 16 to 27, comprising an FTIR spectrometer (24).


**Patentansprüche**

1. Verfahren zum Durchführen von optischen Messungen an einem Werkstück (W), das in einer Messposition angeordnet ist, wobei das genannte Werkstück wenigstens eine im Wesentlichen nichtstreuende, reflektierende Oberfläche (S$_F$) und ein Dickenmaß hat, das die folgenden Schritte beinhaltet: (a) Projizieren wenigstens eines Strahls von Strahlung auf die genannte eine Oberfläche (S$_F$) des genannten Werkstücks (W), wobei der genannte Strahl so fokussiert wird, dass er wenigstens einen beleuchteten Bereich (22) auf der genannten einen Oberfläche erzeugt, der in einer Richtung länglich und in Richtungen im Wesentlichen lotrecht dazu relativ schmal ist, wobei der genannte Strahl über eine Bahn projiziert wird, die in einem Winkel im Bereich von etwa plus 45° bis minus 45° angeordnet ist, azimutal relativ zu einer Ebene gemessen, die medial zu dem genannten einen Bereich (22) und lotrecht zur Länge des genannten Bereichs und auch zu der genannten einen Oberfläche liegt, wobei die genannte Bahn außerdem in einer Lage von etwa 15° bis 75° relativ zur Normalen zu der genannten einen Werkstückfläche angeordnet ist, und (b) Erkennen der von dem genannten einen beleuchteten Bereich reflektierten Strahlung, wobei das genannte Werkstück wenigstens ein Unterseitenmerkmal (S$_B$) unter der genannten einen Oberfläche aufweist, das die genannte projizierte Strahlung reflektiert und dadurch die Bildung eines Geisterbildes (22') des genannten einen beleuchteten Bereichs auf der genannten einen Oberfläche davon bewirkt, **gekennzeichnet durch** den Schritt (c) des Zwischenschaltens eines Ortsilters (12, 30) zwischen das genannte Werkstück (W) und das Mittel (20, 26) zum Erkennen der genannten projizierten Strahlung, um solche Beleuchtungsbedingungen zu erzeugen, dass eine Überlappung des genannten einen beleuchteten Bereichs und des genannten Geisterbildes vermieden wird, wobei das genannte Ortsfilter (12, 30) wenigstens eine allgemein schlitzähnliche Apertur (13, 31) definiert, die die Detektion von in Schritt (b) **durch** den genannten einen beleuchteten Bereich (22) reflektierter Strahlung im Wesentlichen ausschließlich von ausgehender Geisterbildstrahlung zulässt.

2. Verfahren nach Anspruch 1, wobei die genannte eine Oberfläche (S$_F$) die Oberseite des genannten Werkstücks (W) ist.

3. Verfahren nach Anspruch 1, wobei die genannte eine Oberfläche unter der Oberseite des genannten Werkstücks (W) liegt.

4. Verfahren nach Anspruch 3, wobei das genannte Werkstück (W) ein Substrat und wenigstens eine zusätzliche Materialschicht auf dem genannten Substrat umfasst und wobei die genannte eine Oberfläche an der Grenzfläche zwischen der genannten wenigstens einen zusätzlichen Schicht und der darunterliegenden Struktur liegt.

5. Verfahren nach einem der vorherigen Ansprüche, wobei das genannte Unterseitenmerkmal die Rückseite ($S_B$) des genannten Werkstücks (W) umfasst.

6. Verfahren nach einem der Ansprüche 1 bis 4, wobei das genannte eine Unterseitenmerkmal ($S_B$) in der Dicke des genannten Werkstücks (W) liegt.

7. Verfahren nach Anspruch 6, wobei das genannte Werkstück (W) ein Substrat und wenigstens eine zusätzliche Materialschicht auf dem genannten Substrat umfasst und wobei das genannte eine Unterseitenmerkmal ($S_B$) an der Grenzfläche zwischen der genannten wenigstens einen zusätzlichen Schicht und der darunterliegenden Struktur liegt.

8. Verfahren nach einem der vorherigen Ansprüche, wobei der genannte wenigstens eine Strahl Strahlung im infraroten, sichtbaren und/oder ultravioletten Spektralbereich umfasst.

9. Verfahren nach einem der vorherigen Ansprüche, wobei das genannte Werkstück (W) einen Wafer aus halbleitendem Material umfasst.

10. Verfahren nach Anspruch 9, wobei das genannte Werkstück (W) ein Substrat aus halbleitendem Material und wenigstens eine zusätzliche Materialschicht aufweist, die auf der genannten einen Fläche ($S_F$) bereitgestellt ist.

11. Verfahren nach einem der vorherigen Ansprüche, wobei der genannte Schritt des Projizierens des genannten wenigstens einen fokussierten Strahls von Strahlung eine Mehrzahl der genannten beleuchteten Bereiche (22) auf der genannten einen Oberfläche ($S_F$) und eine entsprechende Mehrzahl von Geisterbildern (22') darauf produziert, wobei die genannten Beleuchtungsbedingungen eine abwechselnde Beabstandung der genannten Bereiche und Bilder entlang der genannten Einfallsebene bewirken, die ausreicht, um eine Überlappung von beliebigen zwei der genannten Bereiche und Bilder zu vermeiden.

12. Verfahren nach einem der vorherigen Ansprüche, wobei mehrere der genannten Strahlen von Strahlung so projiziert und fokussiert werden, dass der genannte wenigstens eine beleuchtete Bereich (22) erzeugt wird, wobei der genannte wenigstens eine Strahl den genannten Hauptstrahl und alle genannten Strahlen beinhaltet, die über so angeordnete Bahnen projiziert werden.

13. Verfahren nach einem der vorherigen Ansprüche, wobei die genannte Apertur so dimensioniert, konfiguriert und angeordnet ist, dass sie nur Strahlung (22) des genannten reflektierten beleuchteten Bereichs durchlässt.

14. Verfahren nach einem der vorherigen Ansprüche, das den zusätzlichen Schritt (d) des Messens der Intensität von in dem genannten Schritt (b) erfasster Strahlung beinhaltet.

15. Verfahren nach Anspruch 14, das die folgenden weiteren Schritte beinhaltet: (e) Substituieren für das genannte Werkstück (W), in der genannten Messposition, einer Referenzprobe mit einem bekannten Reflexionswert, und Durchführen der genannten Schritte (a), (b) und (d) auf der genannten Referenzprobe unter den genannten Beleuchtungsbedingungen; und (f) Multiplizieren des Verhältnisses der in den genannten Schritten (d) gemessenen Werkstück:Probe-Strahlungsintensitäten mit dem genannten bekannten Reflexionswert, um dadurch den Reflexionsgrad der genannten wenigstens einen Werkstückoberfläche ($S_F$) zu ermitteln.

16. Vorrichtung zur Durchführung von optischen Messungen an einem Werkstück (W), die Folgendes umfasst:

Mittel (38) zum Lagern eines Werkstücks (W) in einer Messposition;
Mittel (14, 24, 52) zum Projizieren von wenigstens einem Strahl von Strahlung schräg auf eine gewählte Oberfläche ($S_F$) eines so auf dem genannten Auflagemittel ruhenden Werkstücks, wobei der eine Strahl so fokussiert wird, dass er wenigstens einen beleuchteten Bereich (22) auf der gewählten Werkstückoberfläche erzeugt, wobei dieser Bereich in einer Richtung im Wesentlichen lotrecht zur Richtung eines Hauptlichtstrahls länglich und in Richtungen im Wesentlichen parallel dazu relativ schmal ist; und
Mittel (20, 25, 26) zum Erkennen von Strahlung, die von dem wenigstens einen beleuchteten Bereich auf eine gewählte Oberfläche eines so gelagerten Werkstücks reflektiert wird,

**dadurch gekennzeichnet, dass** ein Ortsfilter (12, 13, 30, 31) zwischen dem genannten Werkstück (W) und dem Mittel (26) wirkverbunden ist, wobei das genannte Ortsfilter wenigstens eine allgemein schlitzähnliche Apertur definiert, um reflektierte Strahlungskomponenten des von anderen Bereichen (22') auf der gewählten Oberfläche ausgehenden projizierten Strahls als die genannte beleuchtete Fläche (22) auszuschließen.

17. Vorrichtung nach Anspruch 16, wobei das genannte Mittel (14, 24, 52) zum Projizieren so konstruiert ist, dass es einen Strahl über eine Bahn projiziert, die in einem Winkel im Bereich von etwa plus 45° bis minus 45° angeordnet ist, azimutal relativ zu einer Ebene gemessen, die medial zu dem genannten einen Bereich (22) und lotrecht zur Länge des genannten Bereichs und auch zur gewählten Werkstückoberfläche (S$_F$) liegt, wobei die genannte Bahn zusätzlich in einer Lage von etwa 15° bis 75° relativ zur Normalen zu der genannten gewählten Werkstückoberfläche angeordnet ist.

18. Vorrichtung nach Anspruch 16 oder 17, wobei das genannte Mittel (14, 24, 52) zum Projizieren einer Strahlungsquelle im infraroten, sichtbaren und/oder ultravioletten Spektralbereich umfasst.

19. Vorrichtung nach einem der Ansprüche 16 bis 18, wobei das genannte Mittel (14, 24, 52) zum Projizieren ferner Ortsfilter (10, 11, 28, 29) umfasst, die zwischen der genannten Strahlungsquelle und dem genannten Mittel (38) zum Lagern wirkverbunden sind.

20. Vorrichtung nach Anspruch 19, wobei die genannten weiteren Ortsfilter (10, 11, 28, 29) wenigstens eine allgemein schlitzähnliche Apertur definieren, durch die Strahlung von der genannten Strahlungsquelle (14, 24, 52) passiert.

21. Vorrichtung nach einem der Ansprüche 16 bis 20, wobei die genannte wenigstens eine allgemein schlitzähnliche Apertur im Wesentlichen nur Strahlung durchlässt, die von dem wenigstens einen beleuchteten Bereich (22) auf der gewählten Werkstückfläche (S$_F$) reflektiert wird.

22. Vorrichtung nach einem der Ansprüche 16 bis 21, wobei die genannten Mittel (14, 24, 52) zum Projizieren und die genannten Mittel (20, 25, 26) zum Detektieren Optik (16, 18, 32, 34, 36) jeweils zum Fokussieren des projizierten Strahls an einer Fokalebene auf der gewählten Werkstückoberfläche (S$_F$) und zum Fokussieren von Strahlung beinhaltet, die von dem wenigstens einen beleuchteten Bereich (22) an einer Bildebene reflektiert wird.

23. Vorrichtung nach einem der Ansprüche 16 bis 22, wobei die genannten Mittel (14, 24, 52) zum Projizieren mehrere solche beleuchtete Bereiche (22) erzeugen, die voneinander beabstandet sind.

24. Vorrichtung nach einem der Ansprüche 16 bis 23, wobei die genannten Projektionsmittel (14, 24, 52) mehrere solche Strahlen erzeugen, die so fokussiert sind, dass sie den wenigstens einen beleuchteten Bereich (22) erzeugen.

25. Vorrichtung nach einem der Ansprüche 16 bis 24, die zusätzlich Mittel zum Messen der Intensität von Strahlung beinhaltet, die von den genannten Detektionsmitteln (20, 25, 26) erfasst wird.

26. Vorrichtung nach Anspruch 25, die zusätzlich Mittel zum Ermitteln des Reflexionsgrades der gewählten Oberfläche (S$_F$) eines Werkstücks (W) aufweist, unter Verwendung der gemessenen Intensitäten von Strahlung, die von der gewählten Werkstückfläche und von einer Referenzprobe mit einem bekannten Reflexionswert reflektiert wird.

27. Vorrichtung nach Anspruch 26, wobei das genannte Mittel zum Messen und das genannte Mittel zum Ermitteln elektronische Datenverarbeitungsmittel umfasst.

28. Vorrichtung nach einem der Ansprüche 16 bis 27, die ein FTIR-Spektrometer (24) umfasst.

**Revendications**

1. Procédé pour effectuer des mesures optiques sur une pièce (W) disposée dans une position de mesure, ladite pièce ayant au moins une surface réfléchissante essentiellement non dispersante (S$_F$) et une épaisseur, comprenant les étapes consistant à (a) projeter au moins un faisceau de rayonnement sur ladite surface (S$_F$) de ladite pièce (W), ledit faisceau étant focalisé de manière à produire sur ladite surface au moins une zone éclairée (22) qui est allongée dans une direction et relativement étroite dans les directions qui lui sont essentiellement perpendiculaires, ledit faisceau étant projeté le long d'un chemin disposé suivant un angle dans la plage de plus 45° à moins 45°, pris de façon azimutale par rapport à un plan situé en position médiale à ladite zone (22) et perpendiculaire à la longueur de ladite zone et aussi à ladite surface, ledit chemin étant en outre disposé à une inclinaison d'environ 15° à 75° par rapport à la perpendiculaire à ladite surface de la pièce, et (b) détecter le rayonnement réfléchi par ladite zone éclairée, ladite pièce ayant au moins une subsurface ($S_B$), en dessous de ladite surface, qui reflète ledit rayonnement projeté et cause ainsi la formation d'une image parasite (22') de ladite zone éclairée sur ladite surface, **caractérisé par** l'étape (c) d'interposition d'un moyen formant un filtre spatial (12, 30) entre ladite pièce (W) et un moyen (20, 26) utilisé pour détecter ledit rayonnement projeté de manière à fournir des conditions d'éclairage grâce auxquelles le chevauchement de ladite zone éclairée et de ladite image parasite est évité, ledit moyen formant un filtre spatial (12, 30) définissant au moins une ouverture en forme générale de fente (13, 31), qui permet au rayonnement réfléchi à l'étape (b) par ladite zone éclairée (22) d'être détecté essentiellement exclusivement du rayonnement de l'image parasite émanante.

2. Procédé selon la revendication 1, dans lequel ladite surface ($S_F$) est la surface supérieure de ladite pièce (W).

3. Procédé selon la revendication 1, dans lequel ladite surface se situe en dessous de la surface supérieure de ladite pièce (W).

4. Procédé selon la revendication 3, dans lequel ladite pièce (W) comprend un substrat et au moins une couche supplémentaire de matériau sur ledit substrat, et dans lequel ladite surface se situe à l'interface de la ou lesdites couches supplémentaires et de la structure sous-jacente.

5. Procédé selon l'une quelconque des revendications précédentes, dans lequel ladite subsurface comprend la face arrière ($S_B$) de ladite pièce (W).

6. Procédé selon l'une quelconque des revendications 1 à 4, dans lequel ladite subsurface ($S_B$) se situe à l'intérieur de l'épaisseur de ladite pièce (W).

7. Procédé selon la revendication 6, dans lequel ladite pièce (W) comprend un substrat et au moins une couche supplémentaire de matériau sur ledit substrat, et dans lequel ladite subsurface ($S_B$) se situe à l'interface de la ou desdites couches supplémentaires et de la structure sous-jacente.

8. Procédé selon l'une quelconque des revendications précédentes, dans lequel ledit ou lesdits faisceaux comprennent un rayonnement dans au moins une des gammes spectrales infrarouge, visible et ultraviolette.

9. Procédé selon l'une quelconque des revendications précédentes, dans lequel ladite pièce (W) comprend une plaquette de matériau semi-conducteur.

10. Procédé selon la revendication 9, dans lequel ladite pièce (W) comprend un substrat de matériau semi-conducteur, et au moins une couche supplémentaire de matériau constituant ladite surface ($S_F$).

11. Procédé selon l'une quelconque des revendications précédentes, dans lequel ladite étape de projection dudit ou desdits faisceaux de rayonnement focalisés produit une pluralité desdites zones éclairées (22) sur ladite surface ($S_F$), et une pluralité correspondante d'images parasites (22') sur elles, lesdites conditions d'éclairage causant un espacement alterné desdites zones et images le long dudit plan d'incidence et suffisamment pour éviter le chevauchement de deux quelconques desdites zones et images.

12. Procédé selon l'une quelconque des revendications précédentes, dans lequel une pluralité desdits faisceaux de rayonnement sont projetés et focalisés de manière à produire ladite ou lesdites zones éclairées (22), ledit ou lesdits faisceaux comprenant ledit rayon principal et tous lesdits faisceaux étant projetés le long de chemins ainsi disposés.

13. Procédé selon l'une quelconque des revendications précédentes, dans lequel ladite ouverture est dimensionnée, configurée et disposée pour ne permettre le passage que dudit rayonnement réfléchi de la zone éclairée (22).

14. Procédé selon l'une quelconque des revendications précédentes, comprenant l'étape supplémentaire (d) de mesure de l'intensité dudit rayonnement détecté à ladite étape (b).

15. Procédé selon la revendication 14, comprenant les étapes supplémentaires consistant à : (e) remplacer ladite pièce (W), à ladite position de mesure, par un échantillon de référence ayant une valeur de réflexion connue, et exécuter lesdites étapes (a), (b) et (d) sur ledit échantillon de référence dans lesdites conditions d'éclairage ; et (f) multiplier le rapport des intensités de rayonnement pièce:échantillon, mesurées auxdites étapes (d), par ladite valeur de réflexion connue pour déterminer ainsi la valeur de réflexion de ladite ou desdites surfaces de pièce ($S_F$).

16. Appareil pour effectuer des mesures optiques sur une pièce (W), comprenant :

un moyen (38) pour supporter une pièce (W) dans une position de mesure ;
un moyen (14, 24, 52) pour projeter au moins un faisceau de rayonnement obliquement sur une surface sélectionnée ($S_F$) d'une pièce, ainsi supportée par ledit moyen de support, le faisceau étant focalisé de manière à produire au moins une zone éclairée (22) sur la surface sélectionnée de la pièce, ladite zone étant allongée dans une direction essentiellement perpendiculaire à la direction d'un rayon principal du faisceau et étant relativement étroite dans les directions qui lui sont essentiellement parallèles ; et
un moyen (20, 25, 26) pour détecter le rayonnement réfléchi par la ou les zones éclairées sur une surface sélectionnée d'une pièce ainsi supportée,
**caractérisé en ce qu'**un moyen formant filtre spatial (12, 13, 30, 31) est interposé fonctionnellement entre ladite pièce (W) et le moyen (26), ledit moyen formant filtre spatial définissant au moins une ouverture en forme générale de fente de manière à exclure essentiellement les composantes de rayonnement reflété du faisceau projeté émanant de zones (22') sur la surface sélectionnée autres que ladite zone éclairée (22).

17. Appareil selon la revendication 16, dans lequel ledit moyen (14, 24, 52) pour projeter est construit pour projeter un faisceau le long d'un chemin disposé suivant un angle dans la gamme d'environ plus 45° à moins 45°, pris de manière azimutale par rapport à un plan disposé médialement à ladite zone (22) et perpendiculaire à la longueur de ladite zone et aussi à la surface sélectionnée ($S_F$) de la pièce, ledit chemin étant en outre disposé à une inclinaison d'environ 15° à 75° par rapport à la perpendiculaire à ladite surface sélectionnée de la pièce.

18. Appareil selon la revendication 16 ou 17, dans lequel ledit moyen (14, 24, 52) pour projeter comprend une source de rayonnement dans au moins l'une des gammes spectrales infrarouge, visible et ultraviolette.

19. Appareil selon l'une quelconque des revendications 16 à 18, dans lequel ledit moyen (14, 24, 52) pour projeter comprend un autre moyen formant filtre spatial (10, 11, 28, 29) interposé fonctionnellement entre ladite source de rayonnement et ledit moyen (38) de support.

20. Appareil selon la revendication 19, dans lequel ledit autre moyen formant filtre spatial (10, 11, 28, 29) définit au moins une ouverture en forme générale de fente à travers laquelle passe le rayonnement de ladite source de rayonnement (14, 24, 52).

21. Appareil selon l'une quelconque des revendications 16 à 20, dans lequel au moins une ouverture en forme générale de fente ne permet essentiellement le passage à son travers que du rayonnement reflété par ladite ou lesdites zones éclairées (22) sur la surface sélectionnée ($S_F$) de la pièce.

22. Appareil selon l'une quelconque des revendications 16 à 21, dans lequel ledit moyen (14, 24, 52) pour projeter et ledit moyen (20, 25, 26) pour détecter comprennent une optique (16, 18, 32, 34, 36) pour focaliser le faisceau projeté sur un plan focal sur la surface sélectionnée ($S_F$) de la pièce, et pour focaliser le rayonnement reflété par la ou lesdites zones éclairées (22) sur un plan d'image, respectivement.

23. Appareil selon l'une quelconque des revendications 16 à 22, dans lequel ledit moyen (14, 24, 52) pour projeter produit une pluralité desdites zones éclairées (22) mutuellement espacées entre elles.

24. Appareil selon l'une quelconque des revendications 16 à 23, dans lequel ledit moyen (14, 24, 52) pour projeter produit une pluralité de ces faisceaux, focalisés de manière à produire la ou les zones éclairées (22).

25. Appareil selon l'une quelconque des revendications 16 à 24, comprenant en outre un moyen pour mesurer l'intensité du rayonnement détecté par ledit moyen (20, 25, 26) pour détecter.

26. Appareil selon la revendication 25, comprenant en outre un moyen pour déterminer la valeur de réflexion de la surface sélectionnée ($S_F$) d'une pièce (W) en utilisant les intensités mesurées du rayonnement reflété par la surface sélectionnée de la pièce et par un échantillon de référence ayant une valeur de réflexion connue.

**27.** Appareil selon la revendication 26, dans lequel ledit moyen pour mesurer et ledit moyen pour déterminer comprennent un moyen de traitement électronique des données.

**28.** Appareil selon l'une quelconque des revendications 16 à 27, comprenant un spectromètre infrarouge à transformée de Fourier (FTIR) (24).

Figure 1.

Figure 2

Figure 3.

Figure 4.

FIG.6

Figure 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5403433 A
- US 5604581 A
- US 5243405 A
- EP 0652415 A
- EP 0503874 A
- US 5502564 A
- US 4315688 A